# EUROPÄISCHE PATENTSCHRIFT

(11) **EP 1 129 876 B1**
(45) Veröffentlichungstag und Bekanntmachung des Hinweises auf die Patenterteilung: **27.10.2004**
(21) Anmeldenummer: 01104391.6
(22) Anmeldetag: 23.02.2001
(51) Int. Cl.: B60J 5/04, B60J 5/02, B60J 5/10

(54) **Einstellelement zum Verbinden des Rahmens mit dem Türkasten einer Kraftfahrzeugtüre**
Adjusting element to connect a door frame to the door box of a motor vehicle
Elément d'ajustage pour connecter un châssis de porte avec le caisson de porte d'un véhicule à moteur.

(30) Priorität: 01.03.2000 DE 10009857; 21.03.2000 DE 10013867
(43) Veröffentlichungstag der Anmeldung: 05.09.2001
(73) Patentinhaber: DURA Automotive Plettenberg Entwicklungs- und Vertriebs GmbH, 58840 Plettenberg (DE)
(72) Erfinder: Heuel, Gerhard, 57482 Wenden (DE)
(74) Vertreter: Zinnecker, Armin, Dipl.-Ing.

(56) Entgegenhaltungen:
- EP-A- 0 292 960
- EP-A- 0 794 308
- DE-A- 3 608 506
- DE-A- 3 943 407
- DE-A- 10 007 454
- DE-U- 29 901 413

## Beschreibung

Die Erfindung betrifft ein Einstellelement zum Justieren und Verbinden des Verbindungsstücks eines Türrahmens mit dem Türkasten einer Kraftfahrzeugtüre.

Aus der DE 40 20 746 C2 ist eine Fahrzeugtüre mit einem Einstellelement dieser Art bekannt, die einen dort als Türkörper bezeichneten Türkasten und einen dort als Fensterrahmen bezeichneten Türrahmen umfaßt.

Bei der Herstellung von Kraftfahrzeugtüren ist es erforderlich, den Türkasten mit dem Türrahmen zu verbinden, beispielsweise zu verschrauben. Da es sich bei dem Türrahmen und dem Türkasten einer Kraftfahrzeugtüre allerdings um verhältnismäßig große Bauteile handelt, ist eine einwandfreie Verbindung dieser beiden Teile aufgrund der Fertigungstoleranzen nicht sicher gewährleistet. Das Problem wird noch dadurch verschärft, daß der Türrahmen und der Türkasten ihrerseits jeweils aus verschiedenen Einzelteilen zusammengebaut sind, deren Toleranzen sich ebenfalls addieren können. Auch durch eine Steigerung der Fertigungsgenauigkeit können die Toleranzen im allgemeinen nicht so weit herabgesetzt werden, daß eine zuverlässige Montage möglich ist.

Bei der Fahrzeugtüre nach der erwähnten DE 40 20 746 C2 ist je ein seitlich abstehender Bolzen im oberen Bereich des dort als Türkörper bezeichneten Türkastens angeordnet. Der dort als Fensterrahmen bezeichnete Türrahmen ist um diese Bolzen senkrecht zur Türrahmenebene verschwenkbar. Zur Befestigung des Türrahmens ist im unteren Bereich auf jeder Seite eine Schraubverbindung vorgesehen. Um die Türsteifigkeit zu erhöhen ist der Türrahmen in der Nähe zumindest eines Bolzens durch eine zusätzliche Schraube mit dem Türkasten verbunden. Bei noch nicht festgezogener Schraube ist durch eine vergrößerte Druchtrittsöffnung eine Einstellung des Türrahmens relativ zum Türkasten möglich.

Die WO 98/16401 A1 offenbart eine Kraftfahrzeugtür, die aus einem Türkasten und einem Türrahmen besteht. Der Türkasten weist eine Aufnahme auf, in der ein Federelement angeordnet ist, mit dem der Türrahmen beim Einsetzen verrastet.

Die DE 36 13 978 C1 offenbart eine Kraftfahrzeugtür mit einem Tür-Außenblech und einem dort als Türrahmen bezeichneten Türkasten sowie mit einem daran befestigten Aggregateträger zur Aufnahme von Tür-Einbauaggregaten, insbesondere zur Aufnahme einer Fensterführung. Um eine Anpassung des dort als Fensterrahmen bezeichneten Türrahmens auf einfache Weise zu ermöglichen, wobei auch ein Nachjustieren jederzeit durchgeführt werden kann, ist die Fensterführung mit dem Aggregateträger fest verbunden und wird der Aggregateträger mittels Gelenkverbindungen am Türkasten gehalten. Am Aggregateträger greifen von außerhalb des Hohlraumes für die Fensterscheibe betätigbare Verstelleinrichtungen an, über die der Aggregateträger gegenüber dem Türkasten bewegbar ist.

Aufgabe der Erfindung ist es, ein Einstellelement der eingangs angegebenen Art vorzuschlagen, mit dem eine passgenaue Montage des Türrahmens und des Türkastens einer Kraftfahrzeugtüre möglich ist.

Erfindungsgemäß wird diese Aufgabe durch die Merkmale des Anspruchs 1 gelöst. Das Einstellelement ist mit dem Türkasten verbunden. Es besitzt eine topfförmige Aufnahme, in der ein Federelement vorgesehen ist. Das Verbindungsstück ist in die Vertiefung einführbar, in die korrekte Lage bringbar und in dieser Lage mit dem Einstellelement verbindbar. Durch das Federelement wird ein Toleranzausgleich bewirkt, der eine einwandfreie Montage zuverlässig ermöglicht.

Vorteilhafte Weiterbildungen sind in den Unteransprüchen beschrieben.

Vorteilhaft ist es, wenn zwei Federelemente vorhanden sind. Auf diese Weise können Toleranzen in zwei verschiedenen Richtungen ausgeglichen werden. Die Federelemente sind dabei vorzugsweise einander gegenüberliegend angeordnet. Hierdurch ist es möglich, die Toleranzen in einer Ebene in beiden Richtungen auszugleichen.

Eine weitere vorteilhafte Weiterbildung ist dadurch gekennzeichnet, daß ein weiteres Federelement vorgesehen ist, das vorzugsweise im Winkel, vorzugsweise in einem rechten Winkel, zu dem ersten Federelement angeordnet ist. Hierdurch können Toleranzen in verschiedenen Richtungen ausgeglichen werden. Besonders vorteilhaft ist es, diese Weiterbildung zusammen mit zwei Federelementen zu verwirklichen, die einander gegenüberliegend angeordnet sind. Dann sind drei Federelemente vorhanden, von denen zwei einander gegenüberliegen und das dritte im rechten Winkel zu den beiden erstgenannten Federelementen angeordnet ist, vorzugsweise zwischen den erstgenannten Federelementen.

Es ist vorteilhaft, wenn das bzw. die Federelemente mit Rastkugeln versehen sind. Vorzugsweise ist in diesem Fall das Verbindungsstück mit entsprechenden Rastvertiefungen versehen.

Vorzugsweise sind die Federelemente an einem Aufnahmeteil oder an einem Scharnierteil vorgesehen. Zu diesem Zweck kann das Einstellelement ein Scharnierteil aufweisen oder als Scharnierteil ausgebildet sein.

Die Erfindung betrifft ferner eine Kraftfahrzeugtür, die durch ein erfindungsgemäßes Einstellelement gekennzeichnet ist, sowie eine Kraftfahrzeug, daß durch eine efindungsgemäße Kraftfahrzeugtüre gekennzeichnet ist.

Ein Ausführungsbeispiel der Erfindung wird nachstehend anhand der beigefügten Zeichnungen im einzelnen erläutert. In der Zeichnung zeigt
Fig. 1 einen Teil einer Kraftfahrzeugtüre mit einem Teil des Türrah-mens, einem Verbindungsstück und einem Einstellelement in einer Ansicht von oben und
Fig. 2 das Einstellelement von Fig. 1 in einer Ansicht von der Seite, nämlich in Richtung des Pfeiles X in Fig. 1.

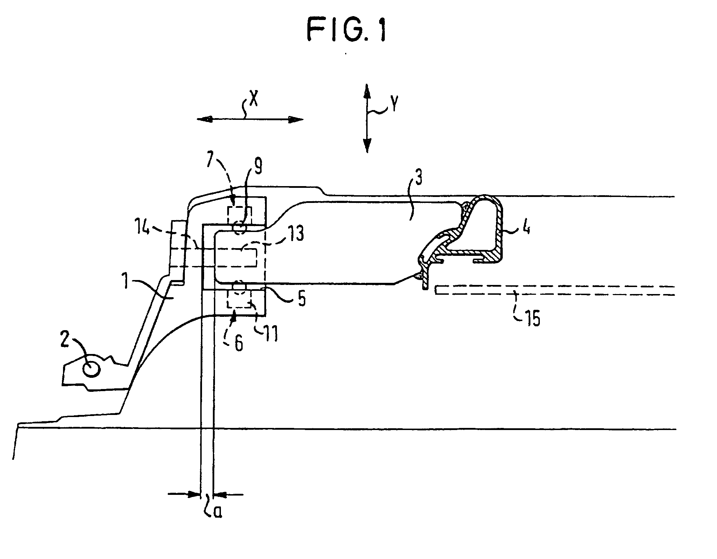

Das in Fig. 1 gezeigte Einstellelement 1 ist als Scharnierteil ausgebildet. Anstelle eines Scharnierteils kann auch ein anderes Aufnahmeteil verwendet werden. Das Einstellelement 1 ist um eine vertikale Achse 2 drehbar mit dem Türkasten einer Kraftfahrzeugtüre verbunden.

Ferner ist das Einstellelement 1 mit einem Verbindungsstück 3 verbunden, durch das eine Verbindung mit dem Türrahmen 4 der Kraftfahrzeugtüre hergestellt wird.

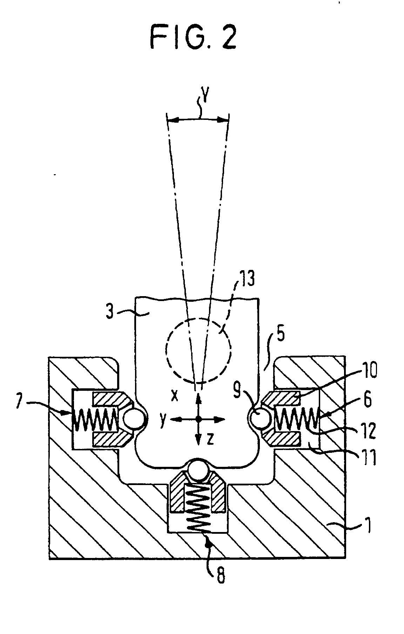

Das Einstellelement 1 besitzt eine topfförmige Aufnahme 5, in der drei Federelemente 6, 7 und 8 vorgesehen sind. Das erste Federelement 6 und das zweite Federelement 7 sind einander gegenüberliegend angeordnet. Das dritte Federelement 8 (Figur 2) ist in einem rechten Winkel zu dem ersten Federelement 6 und dem zweiten Federelement 7 angeordnet. Es befindet sich in der Mitte zwischen den Federelementen 6 und 7.

Die Federelemente 6 und 7 sind in y-Richtung angeordnet, also in der Richtung quer zur Kraftfahrzeug-Längsachse. Das Federelement 8 ist in z-Richtung angeordnet, also in vertikaler Richtung, und zwar unter dem Ende des Verbindungsstücks 3. Die x-Richtung verläuft in Fahrzeug-Längsrichtung. Zum Ausgleich der Toleranz a in x-Richtung ist ein Toleranzkeil vorgesehen, der in z-Richtung beweglich ist (in der Zeichnung nicht im einzelnen dargestellt).

Die Federelemente 6 und 7 dienen zum Toleranzausgleich in y-Richtung. Das Federelement 8 dient zum Toleranzausgleich in z-Richtung.

Jedes Federelement 6, 7, 8 besitzt eine Rastkugel 9, die in einer entsprechenden Vertiefung im Gehäuseteil 10 des Federelements ruht. Das Gehäuseteil 10 ist in einer Vertiefung 11 des Einstellelements 1 verschieblich gelagert. Es ist topfförmig ausgestaltet, wobei die Vertiefung auf der der Kugel abgewandten Seite liegt und ein Federpaket 12 aufnimmt, das sich am Boden der Vertiefung 11 abstützt. Durch das Federpaket 12 ist das Federelement in Richtung zum Verbindungsstück 3 hin vorbelastet.

Die Federelemente 7 und 8 sind in entsprechender Weise aufgebaut.

Zur Befestigung des Verbindungsstücks 3 an dem Einstellelement 1 ist in der Stirnseite des Verbindungsstücks 3 ein Schraubloch 13 vorgesehen, das sich in x-Richtung erstreckt und das mit einer entsprechenden Bohrung 14 in dem Einstellelement 1 fluchtet. Zur Verbindung des Einstellelements 1 mit dem Verbindungsstück 3 wird ein Schraubbolzen durch das Loch 14 hindurchgesteckt und mit dem Schraubloch 13 verschraubt (in der Zeichnung nicht dargestellt).

Durch das Einstellelement wird eine einwandfreie Justierung des Verbindungsstücks 3 und damit des Rahmens 4 ermöglicht. Aufgrund von Toleranzen kann die Lage des Endes des Verbindungsstücks 3 in y-Richtung und in z-Richtung abweichen. Zur Montage wird das Verbindungsstück 3 in die topfförmige Aufnahme 5 eingeführt. Es wird dort von den Federelementen 6, 7, 8 gehalten. Durch eine Montagevorrichtung (in der Zeichnung nicht dargestellt) kann das Ende des Verbindungsstücks 3 in die korrekte Lage gebracht werden, in der sein Schraubloch 13 mit der Bohrung 14 des Einstellelements fluchtet. In dieser Lage kann dann die Schraubverbindung zwischen dem Verbindungsstück und dem Einstellelement 1 hergestellt werden.

Die Scheibe der Kraftfahrzeugtür ist mit dem Bezugszeichen 15 versehen. Durch die Erfindung wird ein Einstellelement geschaffen, das eine einfach Vorjustierung ermöglicht. Eine manuelle Nachjustierung ist nicht notwendig. Das Einstellelement ermöglicht eine stufenlose Justierung. Es ermöglicht eine kostengünstige Montage.

## Patentansprüche

1. Einstellelement zum Justieren und Verbinden des Verbindungsstücks (3) eines Türrahmens (4) mit dem Türkasten einer Kraftfahrzeugtüre,
**dadurch gekennzeichnet,**
**daß** das Einstellelement (1) mit dem Türkasten verbunden ist und eine topfförmige Aufnahme (5) besitzt, in der mindestens ein Federelement (6, 7, 8) vorgesehen ist,
wobei das Verbindungsstück (3) in die topfförmige Aufnahme (5) einführbar und in die korrekte Lage bringbar ist, in der es mit dem Einstellelement (1) verbindbar ist.

2. Einstellelement nach Anspruch 1, **dadurch gekennzeichnet, daß** zwei Federelemente (6, 7) vorgesehen sind, die vorzugsweise einander gegenüberliegend angeordnet sind.

3. Einstellelement nach Anspruch 1 oder 2, **dadurch gekennzeichnet, daß** ein weiteres Federelement (8) vorgesehen ist, das vorzugsweise im Winkel, vorzugsweise in einem rechten Winkel, zu dem ersten Federelement (6, 7) angeordnet ist.

4. Einstellelement nach einem der vorhergehenden Ansprüche, **dadurch gekennzeichnet, daß** das bzw. die Federelemente (6, 7, 8) mit Rastkugeln (9) versehen sind.

5. Einstellelement nach einem der vorhergehenden Ansprüche, **dadurch gekennzeichnet, daß** das bzw die Federelemente (6, 7, 8) an einem Aufnahmeteil oder an einem Scharnierteil (1) vorgesehen sind.

6. Kraftfahrzeugtüre, **gekennzeichnet durch** ein Einstellelement nach einem der Ansprüche 1 bis 5.

7. Kraftfahrzeug, **gekennzeichnet durch** eine Kraftfahrzeugtüre nach Anspruch 6.

## Claims

1. Adjusting element for adjusting and connecting the connecting piece (3) of a door frame (4) to the door box of a motor vehicle door, **characterized in that** the adjusting element (1) is connected to the door box and has a cup-shaped mount (5) in which at least one spring element (6, 7, 8) is provided, it being possible for the connecting piece (3) to be introduced into the cup-shaped mount (5) and to be brought into the correct position, in which it can be connected to the adjusting element (1).

2. Adjusting element according to Claim 1, **characterized in that** two spring elements (6, 7) which are preferably arranged lying opposite each other are provided.

3. Adjusting element according to Claim 1 or 2, **characterized in that** a further spring element (8) is provided and is preferably arranged at an angle, preferably at a right angle, to the first spring element (6, 7).

4. Adjusting element according to one of the preceding claims, **characterized in that** the spring element or the spring elements (6, 7, 8) are provided with latching balls (9).

5. Adjusting element according to one of the preceding claims, **characterized in that** the spring element or the spring elements (6, 7, 8) are provided on a mounting part or on a hinge part (1).

6. Motor vehicle door, **characterized by** an adjusting element according to one of Claims 1 to 5.

7. Motor vehicle, **characterized by** a motor vehicle door according to Claim 6.

## Revendications

1. Elément de réglage pour l'ajustage et l'assemblage de la pièce de liaison (3) d'un cadre de porte (4) avec la caisse de porte d'une porte de véhicule,
**caractérisé en ce que**
l'élément de réglage (1) est relié à la caisse de porte et présente un logement (5) en forme de pot dans lequel au moins un élément de ressort (6, 7, 8) est prévu,
la pièce de liaison (3) pouvant être introduite dans le logement (5) en forme de pot et pouvant être amenée dans la position correcte dans laquelle elle est reliée à l'élément de réglage (1).

2. Elément de réglage selon la revendication 1, **caractérisé en ce que** deux éléments de ressort (6, 7) sont prévus, qui sont disposés de préférence l'un en face de l'autre.

3. Elément de réglage selon la revendication 1 ou 2, **caractérisé en ce qu'**un autre élément de ressort (8) est prévu, qui est disposé de préférence en angle, de préférence dans un angle droit, par rapport au premier élément de ressort (6, 7).

4. Elément de réglage selon l'une quelconque des revendications précédentes, **caractérisé en ce que** le ou les éléments de ressorts (6, 7, 8) sont pourvus de billes d'arrêt (9).

5. Elément de réglage selon l'une quelconque des revendications précédentes, **caractérisé en ce que** le ou les éléments de ressort (6, 7, 8) sont prévus sur une partie de logement ou sur une partie de charnière (1).

6. Porte de véhicule, **caractérisé par** un élément de réglage selon l'une quelconque des revendications 1 à 5.

7. Véhicule, **caractérisé par** une porte de véhicule selon la revendication 6.
